(19) Europäisches Patentamt
European Patent Office
Office européen des brevets

(11) **EP 1 698 059 B1**

(12) **EUROPEAN PATENT SPECIFICATION**

(45) Date of publication and mention
of the grant of the patent:
**08.06.2016 Bulletin 2016/23**

(21) Application number: **04814513.0**

(22) Date of filing: **16.12.2004**

(51) Int Cl.:
*H04N 7/173* (2006.01)    *H04N 21/235* (2011.01)
*H04N 21/236* (2011.01)    *H04N 21/24* (2011.01)
*H04N 21/434* (2011.01)    *H04N 21/435* (2011.01)
*H04N 21/61* (2011.01)    *H04N 21/6332* (2011.01)

(86) International application number:
**PCT/US2004/042337**

(87) International publication number:
**WO 2005/062773 (14.07.2005 Gazette 2005/28)**

(54) **CONTROLLING RETURN PATH IN INTERACTIVE TELEVISION ENVIRONMENT**

STEUERUNG DES RÜCKWEGES IN EINER INTERAKTIVEN FERNSEHUMGEBUNG

CONTROLE DU TRAJET DE RETOUR DANS UN ENVIRONNEMENT TELEVISUEL INTERACTIF

(84) Designated Contracting States:
**AT BE BG CH CY CZ DE DK EE ES FI FR GB GR
HU IE IS IT LI LT LU MC NL PL PT RO SE SI SK TR**

(30) Priority: **22.12.2003 US 744123**

(43) Date of publication of application:
**06.09.2006 Bulletin 2006/36**

(73) Proprietor: **Opentv, Inc.
San Francisco, CA 94111 (US)**

(72) Inventor: **DELPUCH, Alain
F-78690 Les Essarts Leroi (FR)**

(74) Representative: **Leman Consulting S.A.
Chemin de Précossy 31
1260 Nyon (CH)**

(56) References cited:
EP-A- 0 955 739        WO-A-95/34168
US-A- 5 361 394        US-A- 6 131 014
US-A1- 2002 056 132

**Description**

FIELD OF THE INVENTION

The present invention relates generally to the field of electronic communications, and, more specifically, controlling a return path in an interactive television system.

BACKGROUND OF THE INTENTION

Interactive television systems operate to enhance the experience of a content consumer in a number of ways. Firstly, content producers and/or distributors are able to provide enhanced services and features to a consumer. For example, interactive television systems may be capable of executing interactive television (iTV) applications that supplement and enhance the viewing experience of a user. A wide range of interactive television applications may be provided to a user via an interactive television system, ranging from an interactive program guides (IPGs) to games and the like.

Interactive television applications may also be attractive to a content consumer because, such applications elevate a television viewing experience from a purely passive activity to an active, or Interactive, activity. For example, a shopping interactive television application may enable a user to interactively place orders for products being advertised via a television broadcast.

An interactive television application is typically delivered from a headend of a broadcast service provider to a set-top box (STB) of a consumer as part of a broadcast transmission. Such a broadcast may include a television content portion (e.g., audio and video) and an interactive portion. The interactive portion may include application code and control information for an interactive television application. The broadcast service provider typically combines the television content and interactive portions of the broadcast into a single signal that is broadcast to a user location.

At the user end, a user device (e.g., the set-top box (STB)) receives the broadcast, extracts the interactive portion thereof, and composes and executes one or more interactive television applications that are embodied in the interactive portion of the broadcast.

The user device, in addition to extracting and executing the interactive television application, may also be provided with a transmission capability whereby the user device can communicate from the user location back to a broadcast service provider or to other users, for example via a network (e.g., the Internet). However, in some instances, the broadcast service provider may be unable to accommodate a communication from the user device because of insufficient return path capacity. For instance, a modem may be unavailable to answer an incoming network call or a server may be unable to respond to the answered incoming network call because the server capacity is saturated. Further, the inability to distinguish between and prioritize among incoming network calls will hinder the broadcast server provider's ability to make the best use of the return path capacity.

WO 95/34168 discloses a two-way multiple access communication system, a central station and a user station for use in such a system, in which session accompanying control information is exchanged between the central station and the user stations via dedicated control channels.

US 6,131,014 discloses a a bidirectional communication system between a center unit and terminals.

According to an aspect of the present invention, there is provided a method to control communication of data in a return path to a source system in an interactive television system, the method including: at the source system, generating a hint value based on conditions in the interactive television system; and at the source system, broadcasting the hint value to a plurality of receiver systems; characterised in that: each receiver system comprises a read hint value module to control the communication of the data in the return path by comparing the hint value to a random value generated by said receiver system, wherein the generating of the hint value and the broadcasting of the hint value are repetitively performed in real-time.

According to another aspect of the present invention, there is a system to control communication of data in a return path to a source system in an interactive television system, the system including: at the source system, a first means for generating a hint value based on conditions in the interactive television system; and at the source system, a second means for broadcasting the hint value to a plurality of receiver systems; characterised in that: each receiver system comprises a read hint value module arranged to control the communication of the data in the return path by comparing the hint value to a random value generated by said receiver system, wherein the first means is arranged to generate the hint value repetitively in real-time and the second means is arranged to broadcast the hint value repetitively in real-time.

Other features of the present invention will be apparent from the accompanying drawings and from the detailed description that follows.

The present invention is illustrated by way of example and not limitation in the figures of the accompanying drawings, in which like references indicate similar elements and in which:

Figure 1 is a diagrammatic representation of an exemplary interactive television environment within which the present invention may be deployed;

Figure 2 is a block diagram providing architectural details regarding a headend system and a set-top box, according to an exemplary embodiment of the present invention;

**Figure 3** is a block diagram illustrating architecture of a generating hint module, a broadcast module, and a read hint module, according to one embodiment of the present invention;

**Figure 4** is an interactive flowchart illustrating a method, according to one exemplary embodiment of the present invention, to control a return path to a source system in an interactive television environment;

**Figure 5** is a flowchart illustrating a method, according to an exemplary embodiment of the present invention, to generate a hint;

**Figures 6** illustrate a user interface, according to one exemplary embodiment of the present invention, which may be presented by an authoring application so as to enable a user to author and transmit authored content; and

**Figure 7** is a block diagram illustrating a machine, in the exemplary form of a computer system, which may store and execute a set of instructions that cause the machine to perform any of the methods described herein.

DETAILED DESCRIPTION

A method and a system to control a return path to a source system in an inactive television system are described. In the following description, for purposes of explanation, numerous specific details are set forth in order to provide a thorough understanding of the present invention. It will be evident, however, to one skilled in the art that the present invention may be practiced without these specific details.

In general, embodiments described below feature a source system that broadcasts content to receiver systems and controls a communication return path back to the source system. The communication return path is utilized by receiver systems that receive the broadcast content and utilize the return path to communicate information back to the source system or prompt a viewer who may attempt to communicate information back to the source system. The source system controls the communication return path by monitoring conditions in the interactive television system and generating a hint that is utilized by a receiver system to determine whether to utilize the return path or to prompt a viewer to utilize the return path.

A hint may be a ratio comprised of expected values and hardware component measurements that are relevant to predicting the return path capacity. Such a hint is expressed as a numeric value and monitored in real-time by one or more receiver systems, each of which compare the hint to a random value to determine whether to utilize the return path or to provide access to a viewer who may attempt to utilize the return path by responding to interactive content. Thus, the viewer may enjoy a more predictable quality of service because he or she may obtain access to the return path at a time when service is less likely to be denied due to insufficient return path capacity in the form of a lack of servers, modems or some other system resource. Further, a hint may be monitored by a content provider that may change interactive content that is broadcasted to the receiver systems for the purpose of increasing or decreasing the likelihood that a viewer will attempt to utilize the return path.

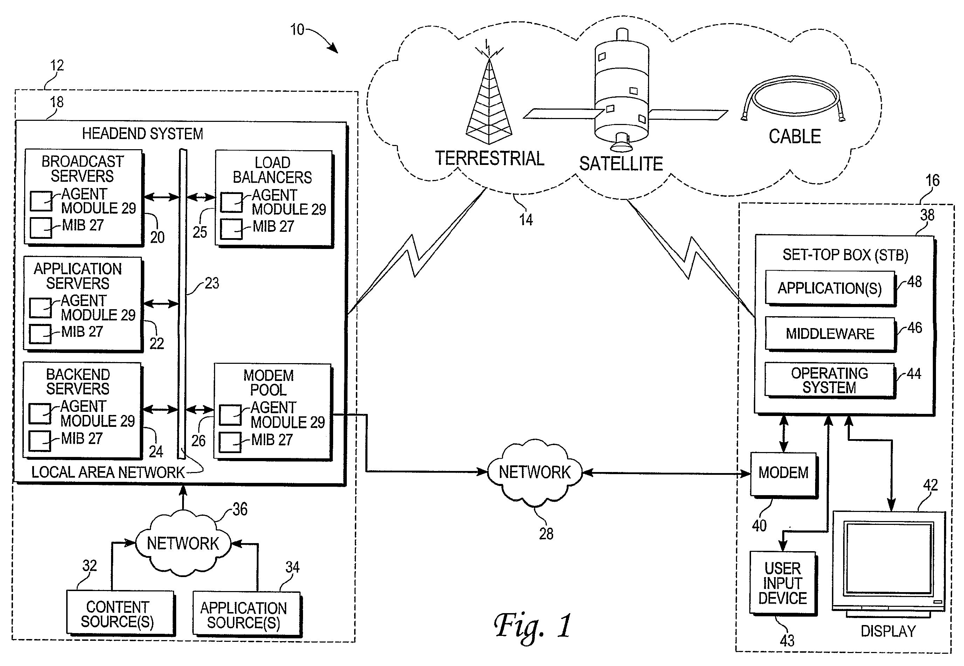

**Figure 1** is a diagrammatic representation of an exemplary interactive television environment 10, in conjunction with which the present invention may be deployed. The interactive television environment 10 includes a source system 12 that communicates data (e.g., television content and interactive application data) via a distribution system 14 to a receiver system 16.

Turning first to the source system 12, a headend system 18 operates to communicate the data as a broadcast transmission. To this end, the headend system 18 is shown to include exemplary components of an interactive television environment including and one or more broadcast servers 20, one or more application servers 22, one or more backend servers 24, and one or more load balancers 25 connected together over a local area network 23. The broadcast servers 20, application servers 22, backend servers 24, and load balancers 25 each include a management information base 27 (MIB), which is a database that is utilized to store and retrieve information for each of the respective devices, and an agent module 29, which is a software module that executes on the respective device to store and retrieve information from the MIB 27.

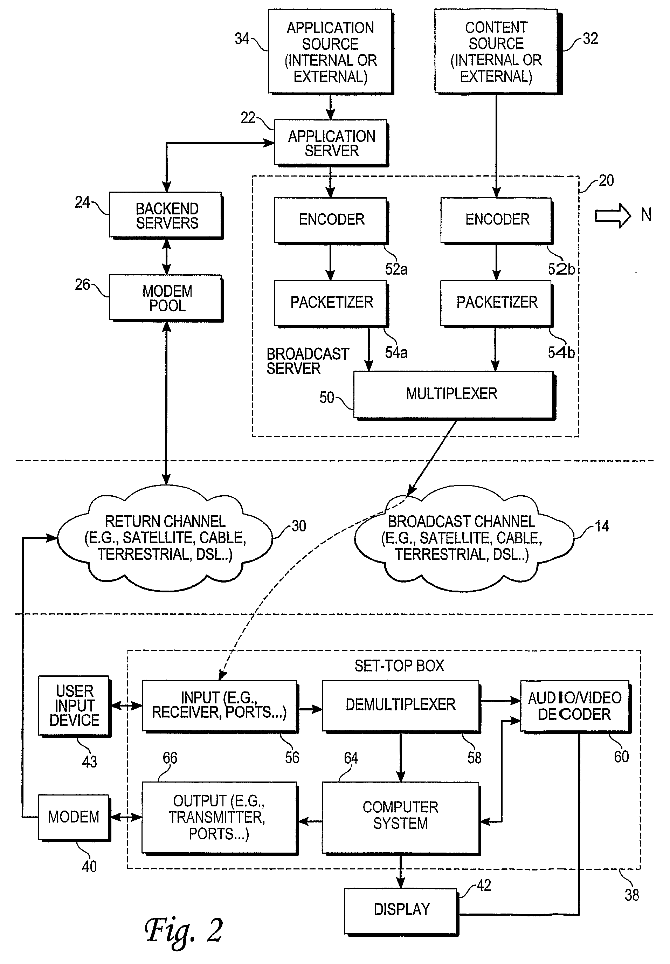

Each of the broadcast servers 20 may operate to receive, encode, packetize, multiplex, and broadcast data from various sources and of various types. While the exemplary embodiment is described herein as transmitting data from the headend system 18 as a broadcast, it will be appreciated that the relevant data could also be unicast or multicast from the source system 12 via the distribution system 14 to the receiver system 16. In various embodiments, data could also be transmitted from the source system 12 via a network connection to the receiver system 16. Further details regarding an exemplary broadcast server 20 are provided below with reference to Figure 2.

Each application server 22, in one exemplary embodiment of the present invention, serves to compile and provide interactive data modules to the broadcast server 20. The interactive data modules may include data (e.g., updated statistics and scores for sporting events, news feed, opinion poll, etc.) utilized by an interactive television application.

An application server 22 also includes multiplexing functionality to enable multiplexing of, for example, interactive television applications and associated data with audio and video signals received from various sources. An application server 22 may also have the capability to feed (e.g., stream) multiple interactive television applications to one or more broadcast servers 20 for distribution to the receiver system 16. To this end, each application server 22 may implement a so-call "carousel", whereby code and data modules are provided to a broadcast server 20 in a cyclic, repetitive manner for inclusion within a transmission from the headend system 18.

The headend system 18 is also shown to include one or more backend servers 24, which are coupled to the application servers 22 and to the load balancers 25 and to a modem pool 26. Specifically, the modem pool 26 is coupled to receive data from the receiver systems 16 via a network 28 (e.g., the Internet) and to provide this data to backend servers 24. The backend servers 24 may then provide the data, received from the receiver system 16, to the application servers 22 and the broadcast servers 20. Accordingly, the network 28 and the modem pool 26 operate as a return path or channel whereby a receiver system 16 is provided with interactivity with the source system 12. Data provided to the headend system 18 via the return channel may include, merely for example, user input to an interactive television application executed at the receiver system 16 or data that is generated by the receiver system 16 and communicated to the source system 12. The return channel 30 may also provide a channel whereby programs and applications from the source system 12 are provided to the receiver system 16.

The headend system 18 is also shown to include a load balancer 25 which is coupled to one or more backend servers 24, one or more application servers 22 and the modem pool 26 over the local area network 23. Specifically, the load balancer 25 manages traffic by enabling multiple application servers 22 or backend servers 24 or modems to share the same network address and by servicing a request by orienting the request to one of the clustered application servers 22 or clustered backend servers 24 or clustered modems (e.g., clustered servers or devices share the same network address). Thus, the load balancer 25 may divide the amount of work between the servers, the modems and other machines in the interactive television environment so that more work gets done in the same amount of time. In one embodiment load balancing may be implemented in hardware. In another embodiment load balancing may be implemented in software. Yet in another embodiment load balancing may be implemented in a combination of hardware and software.

Within the source system 12, the headend system 18 is also shown optionally to receive data (e.g., content, code and application data) from external sources. Figure 1 illustrates the headend system 18 as being coupled to one or more content sources 32 and one or more application sources 34 via a network 36 (e.g., the Internet). For example, a content source 32 could be a provider of entertainment content (e.g., movies), or a provider of real-time dynamic data (e.g., weather information). An application source 34 may be a provider of any interactive television application. For example, one or more application sources 34 may provide Electronic Program Guide (EPG) and navigation applications, messaging and communication applications, information applications, sports applications, and/or games and gaming applications.

Turning now to the distribution system 14, the distribution system 14 may, in one embodiment, support the broadcast distribution of data from the source system 12 to the receiver system 16. As shown, the distribution system 14 may comprise a satellite, cable, terrestrial or Digital Subscribers Line (DSL) network, or any combination of such networks.

The receiver system 16 is shown, in one exemplary embodiment, to include a set-top box (STB) 38 that receives data via the distribution system 14, a modem 40 for return channel communications with the headend system 18 and optionally other external systems, a user input device 43 (e.g., a keyboard, remote control, mouse etc.) and a display device 42, coupled to the set-top box 38, for the display of content received at the set-top box 38. In one exemplary embodiment, the display device 42 may be a television set.

The set-top box 38 may execute three layers of software, namely an operating system 44, middleware 46 and one or more interactive television applications 48. The middleware 46 operates to shield the interactive television application 48 from differences of various operating systems 44 and in hardware of different set-top boxes 38. To this end, the middleware 46 may provide driver Application Program Interfaces (APIs) and a library to translate instructions received from an interactive television application 48 into low-level commands that may be understood by set-top box hardware (e.g., modems, interface ports, smart card readers, etc.).

**Figure 2** is a block diagram illustrating further details regarding the architecture of a headend system 18 and a set-top box 38, as may be deployed as part of an exemplary embodiment of the present invention. Specifically, **Figure 2** shows a broadcast server 20, which may support a carousel of modules, as including a number of parallel paths that provide input to a multiplexer 50, each of the parallel paths including an encoder 52 and a packetizer 54. Each encoder 52 may operate to receive input from one or more sources. For example, the encoder 52a is shown to receive streamed application modules from the application server 22, which is in turn coupled to receive application data from one or more application sources 34. The application source 34 may be internal or external to a headend system 18. Similarly, an encoder 52b is shown coupled to receive content data from one or more content sources 32, which may again be internal or external to the headend system 18.

It will be appreciated that each broadcast server 20 may include any number of parallel paths coupled to any number of sources (e.g., application and/or content sources 34 and 36) that provide input to the multiplexer 50. Furthermore, a headend system 18 may deploy any number of broadcast servers 20.

Each of the encoders 52 operates to encode data utilizing any one or more of a number of compression algorithms, such as for example the Motion Picture Expert Group (MPEG) comparison algorithms. Each of the encoders 52 may also operate to time stamp data for synchronization purposes. It will be appreciated that certain data types may not be susceptible to encoding and may thus pass through, or by-pass, the encoder 52, and be provided to a packetizer 54 in an unencoded state.

The packetizers 54 are coupled to receive both encoded and unencoded data and to format this data into packets before eventual transmission via the distribution system 14 (e.g., a broadcast channel).

Each of the packetizers 54 provides packets to the multiplexer 50, which multiplexes the packets into a transmission signal for distribution via the distribution system 14.

The set-top box 38 of a receiver system 16 is typically coupled to a network input (e.g., a modem), cable input, satellite dish or antenna so as to receive the transmission signal, transmitted from the headend system 18 via the distribution system 14. The transmission signal is then fed to an input 56 (e.g., a receiver, port, etc.). Where the input 56 comprises a receiver, the input 56 may, for example, include a tuner (not shown) that operates to select a broadcast channel on which the transmitted signal is broadcast. The packetized transmission signal is then fed from the input 56 to a demultiplexer 58 that demultiplexes the application and content data that constitute the transmission signal. Specifically, the demultiplexer 58 provides the content data to an audio and video decoder 60, and the application data to a computer system 64. The audio and video decoder 60 decodes the content data into, for example, a television signal. For example, the audio and video decoder 60 may decode the received content data into a suitable television signal such as a NTSC, PAL or HDTV signal. The television signal is then provided from the audio and video decoder 60 to the display device 42.

The computer system 64, which may include a processor and memory, reconstructs one or more interactive television applications from the application data that is provided to it by the demultiplexer 58. As mentioned above, the application data may include both application code and/or application information that is used by an interactive television application 48. The computer system 64, in addition to reconstructing an interactive television application 48, executes such an application 48 to cause the set-top box 38 to perform one or more operations. The computer system 64 may output a signal to the display device 42(e.g., an image or graphical user interface (GUI) to be overlaid on an image produced as a result of the signal provided to the display device 42 from the audio and video decoder 60). A user input device 43 (e.g., a keyboard, remote control, mouse, microphone, camera etc.) is also shown to be coupled to the input 56, so as to enable a user to provide input to the set-top box 38. Such input may, for example, be alphanumeric, audio, video, or control (e.g., manipulation of objects presented in a user interface) input.

The computer system 64 is also shown to be coupled to the audio and video decoder 60 so as to enable the computer system 64 to control this decoder 60. The computer system 64 may also receive an audio and/or video signal from the decoder 60 and combine this signal with generated signals so as to enable the computer system 64 to provide a combined signal to the display device 42.

The computer system 64 is also shown to be coupled to an output 66 (e.g., a transmitter, output port, etc.) through which the set-top box 38 is able to provide output data, via the return channel 30, to an external system, such as for example, the headend system 18. To this end, the output 66 is shown to be coupled to the modem 40 of the receiver system 16.

While the receiver system 16 is shown in **Figure 1** to comprise a set-top box 38 coupled to a display device 42, it will readily be appreciated that the components of the receiver system 16 could be combined into a single device (e.g., a computer system), or could be distributed among a number of independent systems. For example, a separate receiver unit may provide input to a set-top box 38, which is then coupled to a display device 42.

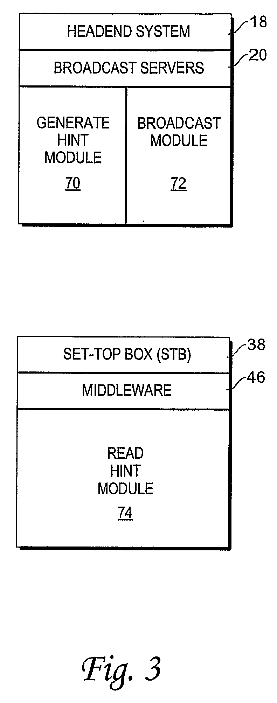

**Figure 3** is a block diagram illustrating various software and hardware components of the headend system 18 and the set-top box 38, according to an exemplary embodiment of the present invention.

The headend system 18 includes broadcast servers 20 that include a generate hint module 70 and a broadcast module 72. The generate hint module 70 monitors the interactive television environment to retrieve information associated with the interactive television environment for the purpose of generating a hint. For example, the generate hint module 70 requests information from the agent modules 29 associated with broadcast servers 20, the application servers 22, the backend servers 24, the modem pool 26, and the load balancers 25 and utilizes the retrieved information to generate a hint. Other embodiments may include additional devices in the interactive television environment. In one embodiment, the generate hint module 70 utilizes the simple network management protocol (SNMP), which is a set of protocols for management of complex networks. As is well known in the art, SNMP sends messages to SNMP-compliant devices, called agents, that store data about the respective device in Management Information Bases (MIB) and that return the previously stored data to the SNMP requester.

The broadcast module 72 receives the hint from the generate hint module 70 and broadcasts the hint over the distribution system 14 to the set-top boxes 38.

The set-top box 38 includes a read hint module 74. The read hint module 74 receives the hint and utilizes the hint to control the return channel 30. For example, in one embodiment, the read hint module 74 determines whether the user associated with the set-top box 38 should be prompted for input thus allowing the user to generate data that is sent over the return channel 30 to the headend system 18. In another embodiment, the read hint module 74 may enable the communication of information to the headend system 18 (e.g., information previously queued at the set-top box for communication).

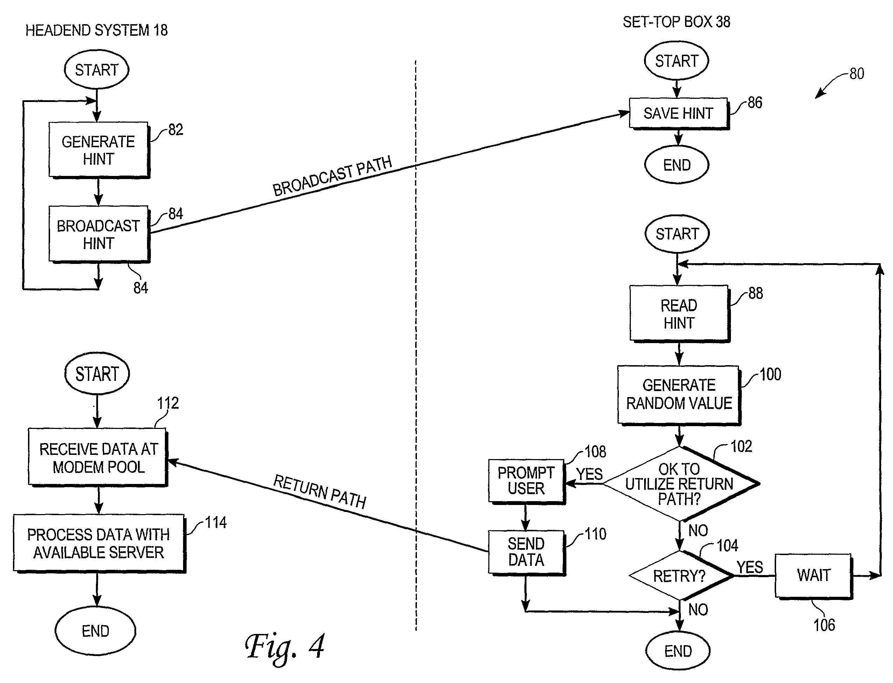

**Figure 4** is an interactive flowchart illustrating a method 80, according to an exemplary embodiment of the present invention, to control a return path to a source system in an interactive television environment. The present exemplary embodiment describes an interactive live television news show that prompts viewers in the audience with a question that may be answered with the viewer's set-top box 38. Headend and set-top box operations are illustrated.

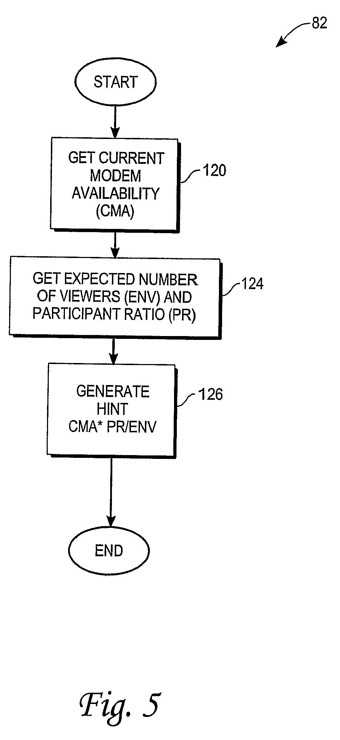

The method 80 commences at box 82 with the generate hint module 70 generating a hint as illustrated in **Figure 5,** according to an exemplary embodiment of the present invention.

On **Figure 5** at box 120, the generate hint module 70 utilizes the SNMP protocol to request status information from the agent module 29 associated with the modem pool 26. In response, the agent module 29 reads the MIB 27 associated with the modem pool 26 and reports status information associated with the modem pool, including the current modem availability (CMA)(e.g., the number of modems available).

At box 124, the generate hint module 70 requests status information from the agent modules 29 associated with the application servers 22. In response, the agent modules 29 on the application servers 22 communicate status information, including an expected number of viewers (ENV) and a participation ratio (PR) (e.g., for an evening news television program). The CMA, PR and ENV parameters are utilized to generate a hint that will determine a ratio or percentage of viewers to prompt with a poll question. For example, the network operator may have one thousand available modems to service the expected number of viewers. By experience, the operator knows that 10% of the viewers that are prompted to vote will actually participate. In general the operator wants to maximize the number of viewers prompted; however, without frustrating a viewer that decides to respond with a busy line.

At box 126, the generate hint module 70 computes the hint by utilizing the following formula:

$$CMA * PR / ENV = HINT \text{ where } HINT > 0;$$

Thus, in the present exemplary embodiment, the hint is an "application X prompt ratio" in the form of a percentage that approaches 1 as modem availability increases, participant ratio increases, and the expected number of viewers decreases. As will be described later, the hint is compared to a random value between 0 and 1 to determine whether to prompt the viewer. Thus, a hint that approaches 1 results in a greater likelihood of prompting a single viewer. It will be appreciated that the likelihood of prompting the viewer may increase or decrease in real time because information associated with the interactive television environment may be dynamic or continuously changing (e.g., current modem availability, participant ratio, and expected number of viewers) and because such information is continuously monitored and expressed in a ratio or a percentage that is broadcasted to the set-top boxes 38 where it is evaluated in real time as described below.

Returning to **Figure 4** at box 84, the generate hint module 70 communicates the hint to the broadcast module 72 that broadcasts the hint to the set-top boxes 38 in the interactive television environment.

At box 86, the read hint module 74 on the set-top box 38 receives the hint and saves the hint in memory.

At box 88, the read hint module 74 reads the hint from memory.

At box 100, the read hint module 74 generates a random value between zero and one with a random number generator. In other embodiments, the read hint module 74 may use one or more bits of the receiver ID associated with the set-top box 38 to generate a random number.

At decision box 102, the read hint module 74 controls the return path by comparing the random value with the hint. If the random value is less than the hint, then a branch is made to box 108. Otherwise, a branch is made to decision box 104. For example, the following pseudo code may be used to determine whether to prompt the viewer:

```
while (the_viewer_is_watching_application_X() and
more-retries
{
  ratio = get_application_X_prompt_ratio_from_broadcast();
  random = get_random_between_0_and_1();
  if (random < ratio)
    prompt viewer();
}
```

At decision box 104, the read hint module 74 determines whether or not a retry should be made. If a retry should be made, then a branch is made to box 106, otherwise the method 80 ends. One embodiment may utilize a fixed number of retries, other embodiments may utilize a number of retries that is dynamic, still other embodiments may utilize a number of retries that are application specific or based on some other information associated with the interactive television environment, etc.

At box 106, the read hint module 74 waits for a period of time that may dynamically change or may be predetermined. Other embodiments may determine the period of time based on a specific application or some other information associated with the interactive television environment.

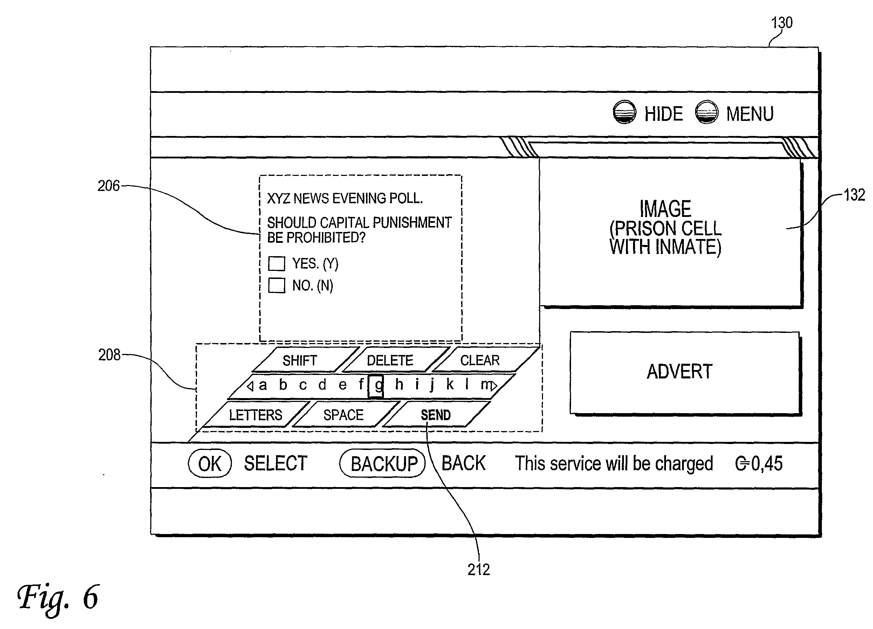

At box 108, the read hint module 74 prompts the user with a question as illustrated on **Figure 6.**

**Figure 6** illustrates an exemplary user interface 130 that displays an image 132, for example a television image of a prison cell with an inmate. The user interface 130 also includes authoring data that includes a polling question regarding capital punishment that is posed by an XYZ news service corresponding to the image 132. For example, the user interface 130 includes a text 206 that prompts the user with the question, "Should capital punishment be prohibited?" Also shown in the text 206 are check boxes that the user may utilize to respond to the poll. An alphanumeric input mechanism in the form of a virtual keyboard 208 is presented to the user or viewer within the context of the interface 130. A virtual keyboard 208 may be navigated utilizing a standard remote control for example, to communicate with the set-top box 38. The viewer may utilize the virtual keyboard 208 to select "Y" indicating an affirmative response to the question or "N" indicating a negative response to the question. The viewer sends his response by selecting the send key 212 which sends data back the return path to the headend system as illustrated at box 110 on **Figure 4.**

Returning to **Figure 4** at box 112, the data is received at the modem pool 26 and communicated to the appropriate server (e.g., application servers 22, backend servers 24, broadcast servers 20) as illustrated in box 114.

Thus a method 80 to control a return path to a source system in an interactive television environment has been illustrated according to an exemplary embodiment of the present invention in the form of an interactive live television news show that prompts some viewers in the audience with a poll question that may be answered with the viewer's set-top box. Method 80 may also be illustrated according to exemplary embodiments in the form of store and forward and concurrent usage type operations in an interactive television environment.

**Store and Forward Operation**

The store and forward type operations may be utilized to retrieve selected purchases entered from a set-top box 38. For example, the store and forward operation may be utilized to retrieve purchases in the form of video on demand (VOD) purchases that are performed locally through a smart card at the set-top box 38 and typically retrieved once a month by the headend system 18. In another embodiment, the store and forward operation may be utilized to retrieve purchases in the form of e-commerce purchases, each purchase for a value below a threshold amount thus disqualifying the purchase from triggering the establishment of an immediate live connection over the return channel 30 with the headend system 18. In both embodiments, usually a small number of modems (M) in the modem pool 26 are dedicated to accept incoming calls for the above-described selected purchases from a large number of clients (N). Further, the number of modems (M) available to service the above described selected purchases may vary with time based on the cumulative demand for modem pool 26 resources. Thus, to avoid unsuccessful attempts at utilizing the modem pool 26 and to avoid utilizing the modem pool 26 resources, to service the above-described low priority purchases thereby preempting higher priority operations, a hint in the form of a modem ratio usage may be continuously broadcasted in real time. The hint may be computed as follows:

$$M/N = HINT \text{ where } 1 > HINT > 0.$$

The above-described hint may be processed by the read hint module 74 with the following pseudo-code.

```
while (the_set-top_box_has_report_to_make())
{
    ratio = get_modem_ratio_usage_ratio_from_broadcast();
    random = random_between_0_and_1();
    if (random < ratio)
      try_to_send_report();
    else
      wait_a_little_bit();
}
```

**Concurrent Usage Operations**

Concurrent usage operations may include partitioning interactive television resources between interactive content providers. For example, in one exemplary embodiment, modems that may be owned by a broadcast operator may be utilized by multiple TV channels and/or multiple interactive applications such as the interactive live television news show described above. In this embodiment each TV channel and/or application may be associated with a corresponding hint or modem ratio usage that may be used to partition the utilization of the modem resources between competing interactive content providers thereby controlling access to the common return channel 30. For example, three hundred modems in a modem pool may be dedicated to a channel five and the remaining seven-hundred modems may be dedicated to other channels. In this example, the hint associated with the channel five would never fall below thirty percent and may in some instances increase significantly above thirty percent based upon the required usage of the other channels.

In another embodiment, a server or class of servers may be identified as the critical resource. For example, an application server 22 in the form of a chat server may be able to host a maximum of fifty concurrent chat sessions even though the broadcast operator provides two-thousand modems to service incoming calls. Thus, the chat server may be quickly overrun if the hint were based on modems partitioned to the chat application. In this example, the controlling hint would be based on the application server 22 resource and not the modem pool 26 resource to ensure that the highest level of service may be provided based upon available resources. To be sure, hints may be computed, broadcasted and utilized for any resource in the interactive television environment (e.g., broadcast servers 20, application servers 22, backend servers 24, load balancers 25, modem pools 26, etc.). Further, hints may be computed, broadcasted and utilized for resources that are dedicated to a particular interactive content provider (e.g., application, TV channel, etc.) thereby providing the network operator with the ability to "sell" or "rent" a portion of the interactive television environment to the interactive content provider (e.g., guaranteed minimum service). Moreover, it will be appreciated that an interactive content provider may alter the broadcast content based on the instantaneous value of the hint. Thus, in the above example, the application server 22 dedicated to chat sessions may close an empty chat room based on the instantaneous value of the hint that is continuously recomputed in real-time. In another example, a live television news show may increase or decrease the planned number of polling questions that are broadcast to the audience during the television show based on the instantaneous value of the hint that is continuously recomputed in real-time.

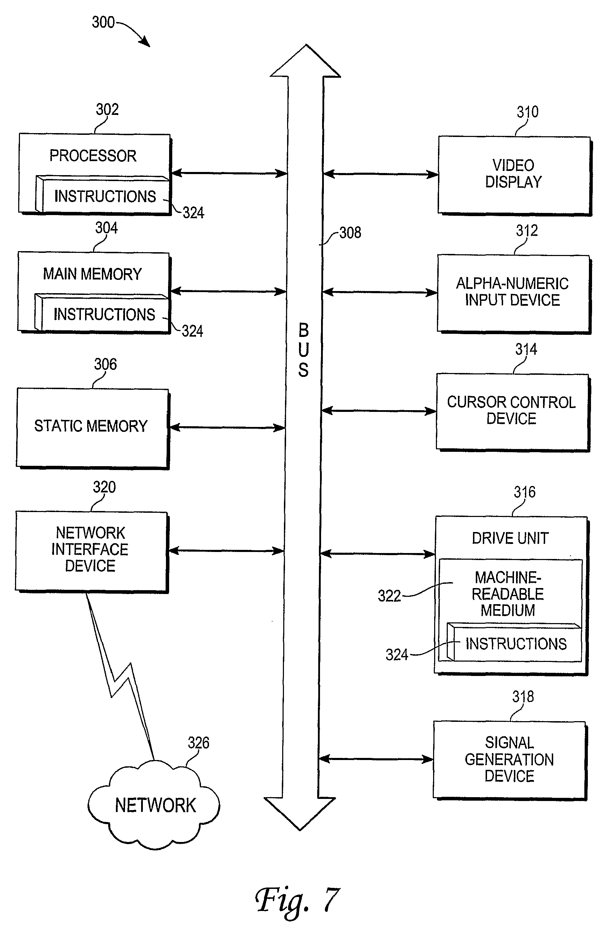

**Figure 7** shows a diagrammatic representation of a machine in the exemplary form of a computer system 300 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server, personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 300 includes a processor 302 (e.g., a central processing unit (CPU) a graphics processing unit (GPU) or both), a main memory 304 and a static memory 306, which communicate with each other via a bus 308. The exemplary computer system 300 may further include a video display unit 310 (e.g., a liquid crystal display (LCD) or a cathode ray tube (CRT)). The computer system 300 also includes an alphanumeric input device 312 (e.g., a keyboard), a user interface (UI) navigation or cursor control device 314 (e.g., a mouse), a disk drive unit 33, a signal generation device 318 (e.g., a speaker) and a network interface device 320.

The disk drive unit 33 includes a machine-readable medium 322 on which is stored one or more sets of instructions (e.g., software 324) embodying any one or more of the methodologies or functions described herein. The software 324 may also reside, completely or at least partially, within the main memory 304 and/or within the processor 302 during execution thereof by the computer system 300, the main memory 304 and the processor 302 also constituting machine-readable media.

The software 324 may further be transmitted or received over a network 326 via the network interface device 320.

While the machine-readable medium 322 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to included, but not be limited to, solid-state memories, optical and magnetic media, and carrier wave signals.

Thus, a method and system to control a return path to a source system in an interactive television environment has been described. Although the present invention has been described with reference to specific exemplary embodiments, it will be evident that various modifications and changes may be made to these embodiments without departing from the scope of the invention. Accordingly, the specification and drawings are to be regarded in an illustrative rather than a restrictive sense.

## Claims

1. A method to control communication of data in a return path to a source system (12) in an interactive television system, the method including:

   at the source system, generating (82) a hint value based on conditions in the interactive television system; and
   at the source system, broadcasting (84) the hint value to a plurality of receiver systems (16);
   **characterised in that**: each receiver system comprises a read hint value module (74) to control the communication of the data in the return path by comparing the hint value to a random value generated by said receiver system, wherein the generating of the hint value and the broadcasting of the hint value are repetitively performed in real-time.

2. The method of claim 1, wherein the generating (82) of the hint value based on conditions in the interactive television system includes monitoring (120, 124) a condition in the interactive television system to determine the hint value.

3. The method of claim 2, wherein the monitoring (120, 124) of the condition includes at least one of monitoring an availability of a modem in a modem pool, monitoring an availability of a back-end server, monitoring an availability of the back-end server in a class of back-end servers and monitoring an allocation of modems within a modem pool to a first application.

4. The method of claim 2, wherein the condition in the interactive television system includes a quantity of viewers expected to utilize the return path.

5. The method of claim 1, wherein the receiver system (16) includes a set-top box (38).

6. The method of claim 1, wherein the receiver system (16) controls the return path by determining whether to provide access to the return path.

7. The method of claim 6, wherein the providing of the access to the control path includes prompting (108) a viewer.

8. The method of claim 1, wherein the receiver system (16) controls the return path by determining whether to utilize the return path.

9. The method of claim 1, including utilizing a random number generator to generate (100) the random value based on a receiver identification number that is associated with the receiver system.

10. The method of claim 1, wherein the broadcasting of the hint value includes communicating the hint value to an interactive content provider that changes broadcast content based on the hint value.

11. A system to control communication of data in a return path to a source system (12) in an interactive television system, the system including:

    at the source system, a first means (70) for generating a hint value based on conditions in the interactive television system; and
    at the source system, a second means (72) for broadcasting the hint value to a plurality of receiver systems (16);
    **characterised in that**: each receiver system comprises a read hint value module (74) arranged to control the communication of the data in the return path by comparing the hint value to a random value generated by said receiver system, wherein the first means (70) is arranged to generate the hint value repetitively in real-time and the second means is arranged to broadcast the hint value repetitively in real-time.

12. The system of claim 11, wherein the first means (70) is arranged to monitor conditions in the interactive television system to determine the hint value.

13. The system of claim 12, wherein the first means (70) is arranged to monitor at least one of an availability of a modem in a modem pool, an availability of a back-end server, an availability of the back-end server in a class of back-end servers and an allocation of modems within a modem pool to a first application.

14. The system of claim 12, wherein the first means (70) is arranged to monitor a number of viewers expected to utilize the return path condition.

15. The system of claim 11, wherein the receiver system (16) includes a set-top box.

16. The system of claim 11, wherein the read hint value module (74) on the receiver system (16) is arranged to determine whether to provide access to the return path.

17. The system of claim 16, wherein the read hint value module (74) is arranged to prompt a user to utilize the return path.

18. The system of claim 11, wherein the random value is generated by a random number generator that utilizes a receiver identification number that is associated with the receiver system (16) to generate the random number.

19. The system of claim 11, wherein the second means (72) arranged to broadcast the hint value is further arranged to communicate the hint value to an interactive content provider that changes broadcast content based on the hint value.

20. A machine-readable medium storing a set of instructions that, when executed by machine, cause the machine to perform the method according to any one or more of Claims 1 to 10.


**Patentansprüche**

1. Verfahren zur Steuerung der Kommunikation von Daten in einem Rückweg zu einer Quelle (12) in einer interaktiven Fernsehumgebung, das folgendes umfasst:

   am Quellsystem Erzeugung (82) eines Hint-Werts auf der Grundlage von Bedingungen in einer interaktiven Fernsehumgebung; und
   am Quellsystem Übertragung (84) des Hint-Werts an eine Vielzahl von Empfängern (16);
   **gekennzeichnet dadurch, dass**: jedes Empfängersystem ein Ablesungs-Hintwertmodul (74) umfasst, um die Kommunikation der Daten auf dem Rückweg durch Vergleichen des Hint-Werts mit einem Zufallswert zu steuern, der von dem Empfängersystem erzeugt wird, wobei die Erzeugung des Hint-Werts und die Übertragung des Hint-Werts wiederholt in Echtzeit durchgeführt werden.

2. Verfahren nach Anspruch 1, wobei die Erzeugung (82) des Hint-Werts basierend auf Bedingungen in dem interaktiven Fernsehsystem die Überwachung (120, 124) einer Bedingung in dem interaktiven Fernsehsystem umfasst, um den Hint-Wert zu bestimmen.

3. Verfahren nach Anspruch 2, wobei die Überwachung (120,124) der Bedingung mindestens eines der folgenden umfasst: Überwachen der Verfügbarkeit eines Modems in einem Modempool, Überwachen der Verfügbarkeit eines Backend-Servers, Überwachen der Verfügbarkeit des Backend-Servers in einer Klasse von Backend-Servern und Überwachen einer Zuteilung von Modems innerhalb eines Modempools zu einer ersten Anwendung.

4. Verfahren nach Anspruch 2, wobei die Bedingung in der interaktiven Fernsehumgebung eine Menge von Zuschauern umfasst, von denen man erwartet, dass sie den Rückweg benutzen.

5. Verfahren nach Anspruch 1, wobei das Empfängersystem (16) eine Set-top-Box (38) umfasst.

6. Verfahren nach Anspruch 1, wobei das Empfängersystem (16) den Rückweg steuert, indem es bestimmt, ob es Zugang zum Rückweg liefern soll.

7. Verfahren nach Anspruch 6, wobei die Vermittlung des Zugangs zu dem Steuerungsweg die Abfrage eines Zuschauers (108) umfasst.

8.  Verfahren nach Anspruch 1, wobei das Empfängersystem (16) den Rückweg steuert, indem es bestimmt, ob man den Rückweg verwenden soll.

9.  Verfahren nach Anspruch 1, mit Benutzung eines Zufallszahlengenerators, um den Zufallswert auf der Grundlage einer Empfängerkennnummer zu erzeugen (100), die mit dem Empfängersystem verbunden ist.

10. Verfahren nach Anspruch 1, wobei die Übertragung des Hint-Werts die Mitteilung des Hint-Werts an einen Anbieter von interaktiven Inhalten umfasst, der Sendeinhalt je nach Hint-Wert ändert.

11. System zum Steuern der Kommunikation von Daten in einem Rückweg zu einem Quellsystem (12) in einer interaktiven Fernsehumgebung, wobei das System folgendes umfasst:

    im Quellsystem ein erstes Mittel (70) zur Erzeugung eines Hint-Werts auf der Grundlage von Bedingungen in der interaktiven Fernsehumgebung; und
    im Quellsystem ein zweites Mittel (72) zur Übertragung des Hint-Werts an eine Vielzahl von Empfängersystemen (16);
    **gekennzeichnet dadurch dass**: jedes Empfängersystem ein Ablesungs-Hintwertmodul (74) umfasst, um die Kommunikation der Daten auf dem Rückweg durch Vergleichen des Hint-Werts mit einem Zufallswert zu steuern, der von besagtem Empfängersystem erzeugt wird,
    wobei das erste Mittel (70) dazu dient, den Hint-Wert wiederholt in Echtzeit zu erzeugen, und das zweite Mittel dazu, den Hint-Wert wiederholt in Echtzeit zu senden.

12. System nach Anspruch 11, wobei das erste Mittel (70) Bedingungen in der interaktiven Fernsehumgebung überwacht, um den Hint-Wert zu bestimmen.

13. System nach Anspruch 12, wobei das erste Mittel (70) mindestens eines der folgenden zu überwachen: die Verfügbarkeit eines Modems in einem Modempool, die Verfügbarkeit eines Backend-Servers, eine Verfügbarkeit des Backend-Servers in einer Klasse von Backend-Servern und eine Zuteilung von Modems innerhalb eines Modempools an eine erste Anwendung.

14. System nach Anspruch 12, wobei das erste Mittel (70) eine Anzahl von Zuschauern überwacht, von denen erwartet wird, dass sie die Rückwegbedingung verwenden.

15. System nach Anspruch 11, wobei das Empfängersystem (16) eine Set-top-Box umfasst.

16. System nach Anspruch 11, wobei das Ablesungs-Hintwertmodul (74) auf dem Empfängersystem (16) angebracht ist, um zu bestimmen, ob es Zugang zum Rückweg liefern soll.

17. System nach Anspruch 16, wobei das Ablesungs-Hintwertmodul (74) angebracht ist, um einen Benutzer aufzufordern, den Rückweg zu verwenden.

18. System nach Anspruch 11, wobei der Zufallswert von einem Zufallszahlengenerator erzeugt wird, der eine Empfängerkennnummer benutzt, die mit dem Empfängersystem (16) verbunden ist, um die Zufallszahl zu erzeugen.

19. System nach Anspruch 11, wobei das zweite Mittel (72), das den Hint-Wert sendet, des weiteren den Hint-Wert einem Anbieter von interaktiven Inhalten mitteilt, der den Sendeinhalt je nach dem Hint-Wert ändert.

20. Maschinenlesbares Medium, das einen Satz von Anweisungen speichert, die, wenn sie von Maschine ausgeführt werden, dazu führen, dass die Maschine das Verfahren nach einem beliebigen oder mehreren der Ansprüche 1 bis 10 ausführt.

**Revendications**

1.  Méthode pour contrôler la communication de données dans une voie de retour à un système source (12) dans un système de télévision interactive, la méthode comprenant:

    au système source, génération (82) d'une valeur d'indice basée sur les conditions dans le système de télévision interactive; et

au système source, diffusion (84) de la valeur d'indice à une pluralité de systèmes de récepteurs (16); **caractérisée en ce que**: chaque système de récepteurs comprend un module de lecture de la valeur d'indice (74) pour contrôler la communication des données dans la voie de retour en comparant la valeur d'indice à une valeur aléatoire générée par ledit système de récepteurs, où la génération de la valeur d'indice et la diffusion de la valeur d'indice sont accomplies de façon répétitive en temps réel.

2. Méthode selon la revendication 1, où la génération (82) de la valeur d'indice basée sur les conditions dans le système de télévision interactive comprend le monitorage (120, 124) d'une condition dans le système de télévision interactive pour déterminer la valeur d'indice.

3. Méthode selon la revendication 2, où le monitorage (120, 124) de la condition comprend au moins l'un parmi monitorage d'une disponibilité d'un modem dans un ensemble de modems, monitorage d'une disponibilité d'un serveur de back-end, monitorage d'une disponibilité du serveur de back-end dans une classe de serveurs de back-end et monitorage d'une attribution de modems dans un ensemble de modems à une première application.

4. Méthode selon la revendication 2, où la condition dans le système de télévision interactive comprend une quantité de spectateurs qui sont supposés utiliser la voie de retour.

5. Méthode selon la revendication 1, où le système de récepteurs (16) comprend un boîtier décodeur (38).

6. Méthode selon la revendication 1, où le système de récepteurs (16) contrôle la voie de retour en déterminant si fournir l'accès à la voie de retour ou non.

7. Méthode selon la revendication 6, où la fourniture de l'accès à la voie de contrôle comprend l'invitation (108) à un spectateur.

8. Méthode selon la revendication 1, où le système de récepteurs (16) contrôle la voie de retour en déterminant si utiliser la voie de retour ou non.

9. Méthode selon la revendication 1, comprenant l'usage d'un générateur de numéros aléatoires pour générer (100) la valeur aléatoire basée sur un numéro d'identification de récepteur qui est associé au système de récepteurs.

10. Méthode selon la revendication 1, où la diffusion de la valeur d'indice comprend la communication de la valeur d'indice à un fournisseur de contenu interactif qui change le contenu d'une diffusion selon la valeur d'indice.

11. Système pour contrôler la communication de données dans une voie de retour à un système source (12) dans un système de télévision interactive, le système comprenant:

au système source, un premier moyen (70) pour générer une valeur d'indice basée sur les conditions dans le système de télévision interactive; et
au système source, un deuxième moyen (72) pour diffuser la valeur d'indice à une pluralité de systèmes de récepteurs (16);
**caractérisé en ce que**: chaque système de récepteurs comprend un module de lecture de la valeur d'indice (74) disposé pour le contrôle de la communication des données dans la voie de retour en comparant la valeur d'indice à une valeur aléatoire générée par ledit système de récepteurs,
où le premier moyen (70) est disposé pour générer la valeur d'indice de façon répétitive en temps réel et le deuxième moyen est disposé pour diffuser la valeur d'indice de façon répétitive en temps réel.

12. Système selon la revendication 11, où le premier moyen (70) est disposé pour contrôler les conditions dans le système de télévision interactive pour déterminer la valeur d'indice.

13. Système selon la revendication 12, où le premier moyen (70) est disposé pour contrôler au moins l'une parmi une disponibilité d'un modem dans un ensemble de modems, une disponibilité d'un serveur de back-end, une disponibilité du serveur de back-end dans une classe de serveurs de back-end et une attribution de modems dans un ensemble de modems à une première application.

14. Système selon la revendication 12, où le premier moyen (70) est disposé pour contrôler un nombre de spectateurs qui sont supposés utiliser la condition de voie de retour.

**15.** Système selon la revendication 11, où le système de récepteurs (16) comprend un boîtier décodeur.

**16.** Système selon la revendication 11, où le module de lecture de la valeur d'indice (74) sur le système de récepteurs (16) est disposé pour déterminer si fournir l'accès à la voie de retour ou non.

**17.** Système selon la revendication 16, où le module de lecture de la valeur d'indice (74) est disposé pour inviter un utilisateur à utiliser la voie de retour.

**18.** Système selon la revendication 11, où la valeur aléatoire est générée par un générateur de numéros aléatoires qui utilise un numéro d'identification de récepteur qui est associé au système de récepteurs (16) pour générer le numéro aléatoire.

**19.** Système selon la revendication 11, où le deuxième moyen (72) disposé pour diffuser la valeur d'indice est de plus disposé pour communiquer la valeur d'indice à un fournisseur de contenu interactif qui change le contenu d'une diffusion selon la valeur d'indice.

**20.** Support lisible par machine stockant un ensemble d'instructions qui, lorsqu'elles sont exécutées par la machine, font exécuter à la machine la méthode selon l'une quelconque ou plus d'une des revendications 1 à 10.

*Fig. 1*

*Fig. 2*

```
                           ┌──────────────────────────────┐ ╭18
                           │      HEADEND SYSTEM          ├╯
                           ├──────────────────────────────┤ ╭20
                           │     BROADCAST SERVERS        ├╯
                           ├───────────────┬──────────────┤
                           │  GENERATE     │  BROADCAST   │
                           │  HINT         │  MODULE      │
                           │  MODULE       │              │
                           │               │              │
                           │    70         │    72        │
                           └───────────────┴──────────────┘
```

```
                           ┌──────────────────────────────┐ ╭38
                           │     SET-TOP BOX (STB)        ├╯
                           ├──────────────────────────────┤ ╭46
                           │        MIDDLEWARE            ├╯
                           ├──────────────────────────────┤
                           │                              │
                           │         READ                 │
                           │         HINT                 │
                           │         MODULE               │
                           │                              │
                           │          74                  │
                           └──────────────────────────────┘
```

*Fig. 3*

HEADEND SYSTEM 18

SET-TOP BOX 38

START

GENERATE HINT — 82

BROADCAST HINT — 84

84

BROADCAST PATH

START

SAVE HINT — 86

END

START

READ HINT — 88

GENERATE RANDOM VALUE — 100

OK TO UTILIZE RETURN PATH? — 102

PROMPT USER — 108

YES

NO

RETRY? — 104

YES

WAIT — 106

NO

SEND DATA — 110

RETURN PATH

START

RECEIVE DATA AT MODEM POOL — 112

PROCESS DATA WITH AVAILABLE SERVER — 114

END

END

80

*Fig. 4*

EP 1 698 059 B1

```
                                                    82

                        START


                    GET CURRENT
                      MODEM              120
                    AVAILABILITY
                       (CMA)


                  GET EXPECTED NUMBER        124
                  OF VIEWERS (ENV) AND
                  PARTICIPANT RATIO (PR)


                     GENERATE             126
                       HINT
                    CMA* PR/ENV


                         END
```

Fig. 5

EP 1 698 059 B1

130

⊜ HIDE   ⊜ MENU

132

206 —

XYZ NEWS EVENING POLL.

SHOULD CAPITAL PUNISHMENT
BE PROHIBITED?

☐ YES. (Y)

☐ NO. (N)

IMAGE
(PRISON CELL
WITH INMATE)

208 —

| SHIFT | DELETE | CLEAR |

◁ a  b  c  d  e  f  g  h  i  j  k  l  m ▷

| LETTERS | SPACE | SEND |

ADVERT

(OK) SELECT   (BACKUP) BACK   This service will be charged   ⊖0,45

212

*Fig. 6*

300

302

PROCESSOR

INSTRUCTIONS
324

304

MAIN MEMORY

INSTRUCTIONS
324

306

STATIC MEMORY

320

NETWORK
INTERFACE
DEVICE

326

NETWORK

308

B
U
S

310

VIDEO
DISPLAY

312

ALPHA-NUMERIC
INPUT DEVICE

314

CURSOR CONTROL
DEVICE

316

DRIVE UNIT

322

MACHINE-
READABLE
MEDIUM

324

INSTRUCTIONS

318

SIGNAL
GENERATION
DEVICE

*Fig. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9534168 A

- US 6131014 A